# EUROPEAN PATENT SPECIFICATION

(11) **EP 2 410 842 B1**
(45) Date of publication and mention of the grant of the patent: **08.03.2017**
(21) Application number: 10756654.9
(22) Date of filing: 22.03.2010
(51) Int. Cl.: A01N 33/00, A01N 47/44, A01N 33/12, A01N 25/30

(54) **SANITIZER FORMULATIONS**
DESINFEKTIONSREINIGERFORMULIERUNGEN
FORMULATIONS D'AGENT ASSAINISSANT

(30) Priority: 23.03.2009 US 162362 P; 19.03.2010 US 727405
(43) Date of publication of application: 01.02.2012
(73) Proprietor: Arch Chemicals, Inc., Norwalk, CT 06508-5204 (US)
(72) Inventor: MCGEECHAN, Paula, Louise, Bury BL0 9HR (GB); WOODS, William, Paramus, NJ 07652 (US)
(74) Representative: Riegler, Norbert Hermann
(86) International application number: PCT/US2010/028077
(87) International publication number: WO 2010/111155

(56) References cited:
- WO-A2-2009/117299
- DE-A1-102004 035 881
- US-A- 5 529 713
- US-B1- 6 303 557

## Description

### BACKGROUND OF THE INVENTION

Quaternary ammonium compounds, such as alkyldimethylbenzyl ammonium chloride (ADBAC) and didecyldimethyl ammonium chloride (DDAC), are known to be effective antimicrobials for use in household and Industrial & Institutional (I&I) sanitizer formulations. Illustratively, U.S. Patent No. 5,000,867 discloses a sanitizing composition for use in the cleaning-in-place of food industry equipment containing 0.01-5% of quaternary ammonium antimicrobial agents and 0.01-25% of guanidine anti-microbial agents, together with one or more organic acids and one or more inorganic acids.

U.S. Patent No. 5,529,713 discloses a cleaning and disinfecting composition for household use containing ethoxylated fatty alcohol, co-surfactant, isopropyl alcohol, polyhexamethylene biguanide hydrochloride, didecyl dimethylammonium chloride and benzalkonium chloride. The biocide is present in an amount of from 1 to 40%.

U.S. Patent Application No. 20030100465 discloses a cleaning composition adapted to clean hard surfaces containing a cationic biocide, surfactant and a polymer, where the cationic biocide includes quaternary ammonium compound, biguanide compound, and mixtures thereof.

DE 10 2004 035 881 A1 discloses a composition useful for machine cleaning and disinfecting of medical instruments of composite materials comprising water, a surfactant, and a combination of active ingredients selected from dialkyldimethyl ammonium compounds, monoalkyldimethyl ammonium compounds, guanidines, and enzymes selected from lipases, proteases, and amylases.

U.S. Patent No. 6,303,557 discloses a biocidal cleaning composition comprising a solvent, a polymeric biguanide, a quaternary ammonium salt, a sequestrant, and a surfactant.

While quaternary ammonium compounds have proven useful in a wide range of applications, their use in household, industrial and institutional indirect food contact applications is limited due to the regulatory restriction on the maximum permitted use levels of these compounds. For example, EPA 40 CFR 180.940 lists the upper limit for ADBAC at 200 ppm active ingredient and DDAC at 240 ppm active ingredient. At such low levels, these quaternary ammonium compounds are normally not effective for its intended purposes. In addition, these quaternary ammonium compounds are also limited in use flexibility. Accordingly, alternative sanitizer formulations are needed for household indirect food contact applications that are effective, flexible and cost-effective. The present invention provides one such alternative.

### SUMMARY OF THE INVENTION

In one aspect, the present invention relates to a sanitizer formulation according to claim 1 comprising:
(a) an antimicrobial active agent selected from the group consisting of biguanides, monoguanides, and combinations thereof; (b) a dialkyldimethyl ammonium salt, and (c) a compound selected from the group consisting of an alkyldimethylbenzyl ammonium salt, an alkoxylated alcohol, and combinations thereof. The preferred component (a) is polyhexamethylene biguanide or the salts thereof.

In the formulation, the component (a) is present in an amount of from about 25 to about 110 ppm (preferably from about 35 ppm to about 75 ppm), and the component (b) is present in an amount of from about 20 to about 125 ppm (preferably from about 50 ppm to about 100 ppm). In addition, the component (a) and the component (b) are present in a weight ratio range of between about 1:5 to about 2.5 to 1 (preferably between about 1:2 to about 1:1). If present, the alkoxylated alcohol is present in an amount of from about 35 ppm to about 200 ppm (preferably from about 105 ppm to about 125 ppm) and the alkyldimethylbenzyl ammonium salt is present in an amount of from about 20 ppm to about 65 ppm (preferably from about 50 ppm to about 60 ppm).

In another aspect, the present invention relates to a sanitizer formulation concentrate that, upon dilution with water, provides a ready to use sanitizer formulation as specified in the above embodiment. The concentrate comprises from about 0.64% to about 3.84% of component (a), from about 0.55% to about 5.12% of component (b). In the concentrate, the component (a) and the component (b) are present in a weight ratio range of between about 1:5 to about 2.5:1 (preferably from about 1:2 to about 1:1).

In yet another aspect, the present invention relates to a method for sanitizing surfaces that may be in indirect contact with food. The method comprises the steps of: providing a sanitizer formulation concentrate, diluting the sanitizer formulation concentrate to provide a ready to use antimicrobially effective sanitizer formulation, and contacting the ready to use sanitizer formulation with the surface to be sanitized.

These and other aspects will become apparent upon reading the following detailed description of the invention.

### DETAILED DESCRIPTION OF THE INVENTION

It has now been surprisingly found in accordance with the present invention that a sanitizer formulation containing: (a) an antimicrobial active agent selected from the group consisting of biguanides, monoguanides, and combinations thereof, (b) a dialkyldimethyl ammonium salt, and (c) a compound selected from the group consisting of alkyldimethylbenzyl ammonium salt, an alkoxylated alcohol, and combinations thereof, exhibits enhanced antimicrobial efficacy over the formulations containing only component (a) or component (b) or component (c) as a biocide. The inventors also found that when the sanitizer formulation contains components (a) and (b) in a proper weight ratio, the formulation of the invention can include component (b) in an amount below the maximum use level imposed by government regulations, yet at the same time achieve an efficacy effective for use in household, industrial and institutional indirect food contact applications.

Component (a) of the sanitizer formulation according to the invention is selected from the group consisting of biguanides, monoguanides, and combinations thereof. The biguanide is disclosed in U.S. Application No. 2005/0014670. Preferably the biguanide comprises at least two biguanide units of Formula (1): 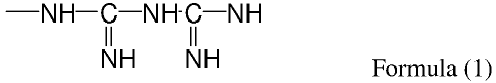 linked by a bridging group which contains at least one methylene group. The bridging group preferably includes a polymethylene chain, optionally incorporating or substituted by one or more hetero atoms such as oxygen, sulphur or nitrogen. The bridging group may include one or more cyclic moieties which may be saturated or unsaturated. Preferably, the bridging group is such that there are at least three, and especially at least four, carbon atoms directly interposed between two adjacent biguanide units of Formula (1).
Preferably, there are not greater than ten and especially not greater than eight carbon atoms interposed between two adjacent biguanide units of Formula (1).

The polymeric biguanide may be terminated by any suitable group, such as a hydrocarbyl, substituted hydrocarbyl or an amine group or a cyanoguanidine group of the Formula (2):

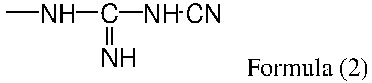

When the terminating group is hydrocarbyl, it is preferably alkyl, cycloalkyl, aryl or aralkyl. When the hydrocarbyl group is alkyl it may be linear or branched but is preferably linear. Preferred alkyl groups include C₁₋₈-alkyl. Examples of preferred alkyl groups include for example methyl, ethyl, n-propyl, isopropyl, n-pentyl, n-butyl, isobutyl, tert-butyl and n-octyl.

When the hydrocarbyl group is cycloalkyl, it is preferably cyclopropyl, cyclopentyl or cyclohexyl. When the hydrocarbyl group is aralkyl, it preferably contains from 1 to 6, more preferably 1 or 2 carbon atoms in the alkylene group attaching the aryl group to the biguanide. Preferred aralkyl groups include benzyl and 2-phenylethyl groups. Preferred aryl groups include phenyl groups.

When the terminating group is substituted hydrocarbyl, the substituent may be any substituent that does not exhibit undesirable adverse effects on the microbiological properties of the polymeric biguanide. Examples of such substituents are aryloxy, alkoxy, acyl, acyloxy, halogen and nitrile.

When the polymeric biguanide contains two biguanide groups of Formula (1), the biguanide is a bisbiguanide. The two biguanide groups are preferably linked through a polymethylene group, especially a hexamethylene group.

The polymeric biguanide preferably contains more than two biguanide units of Formula (1) and is preferably a linear polymeric biguanide which has a recurring polymeric chain represented by Formula (3) or a salt thereof: 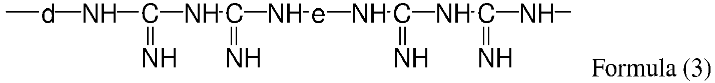 wherein d and e represent bridging groups which may be the same or different and in which together the total of the number of carbon atoms directly interposed between the pairs of nitrogen atoms linked by d plus the number of carbon atoms directly interposed between the pairs of nitrogen atoms linked by e is more than 9 and less than 17.

The bridging groups d and e preferably consist of polymethylene chains, optionally interrupted by hetero atoms, for example, oxygen, sulphur or nitrogen. D and e may also incorporate moieties which may be saturated or unsaturated, in which case the number of carbon atoms directly interposed between the pairs of nitrogen atoms linked by d and e is taken as including that segment of the cyclic group, or groups, which is the shortest. Thus, the number of carbon atoms directly interposed between the nitrogen atoms in the group 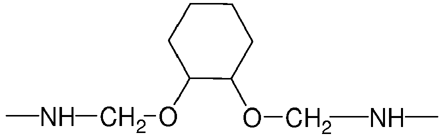 is 4 and not 8.

The linear polymeric biguanides having a recurring polymer unit of Formula (3) are typically obtained as mixtures of polymers in which the polymer chains are of different lengths. Preferably, the number of individual biguanide units of Formulae (4a) and (4b): 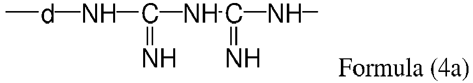 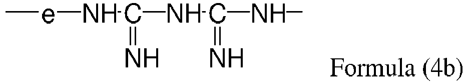 is, together, from 3 to about 80.

The preferred linear polymeric biguanide is a mixture of polymer chains in which d and e are identical and the individual polymer chains, excluding the terminating groups, are of the Formula (5) or a salt thereof: 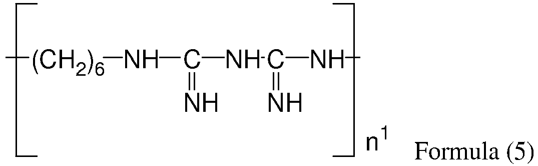 wherein n¹ is from 4 to 20 and especially from 4 to 18. It is especially preferred that the average value of n¹ is about 12. Preferably, the average molecular weight of the polymer in the free base form is from 1100 to 4000.

Preferably the polymeric biguanide is in the form of a salt. Preferred salts are those with organic or inorganic acids, especially water-soluble salts, for example, the chloride, gluconate, acetate or phosphate salt.

The linear polymeric biguanides may be prepared by the methods disclosed in U.S. Patent Application Publication 2005/0014670.

The PMG preferably comprises a plurality of groups of Formula (6) and/or groups of Formula (7) or salts thereof: 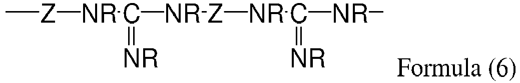 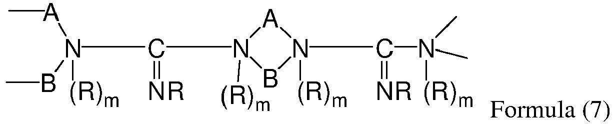 wherein: each m independently is 0 or 1; each Z independently is a C₂₋₁₈-hydrocarbyl group; A and B are hydrocarbyl groups which together comprise a total of 3 to 18 carbon atoms; each R independently is hydrogen, optionally substituted alkyl or optionally substituted alkoxy. Preferably each m is 0.

The hydrocarbyl groups in the PMG and represented by Z, A and B are optionally interrupted by one or more hetero atoms or groups and optionally carry one or more substituents other than hydrogen. Preferred interrupting atoms and groups are --O--, --S--, --NH--, --C(=O)-- and phenylene. Preferred optional substituents are hydroxy; C₁₋₄-alkoxy; halo, especially chloro or bromo; nitro; amino; substituted amino; and acid groups, especially carboxy, sulpho and phosphato.

Preferably the hydrocarbyl groups in the PMG and represented by Z are C₂₋₁₈-alkylene (more preferably C₄₋₁₆-alkylene, especially C₆₋₁₂-alkylene, more especially C₆-alkylene); C₃₋₁₂-arylene, more preferably C₆₋₁₀-arylene, especially phenylene or naphthylene; C₇₋₁₂-arakylene (more preferably C₇₋₁₁-arylene, especially benzylene or xylyene); or a combination thereof, optionally interrupted by one or more --O--, --S--,-NH-- or --C(=O)-- groups.

Preferably the hydrocarbyl groups represented by A and B are each independently C₂₋₆-alkylene, optionally interrupted by one or more --O--, --S--, --NH-- or --C(=O)-groups, with the proviso that A and B comprise a total of 3 to 12 carbon atoms, preferably 3 to 6 carbon atoms, more preferably 3 or 4 carbon atoms. In an especially preferred embodiment one of A or B is --CH₂-- or --(CH₂)₂-- and the other is --(CH₂)₂--, more especially both A and B are --(CH₂)₂---.

Examples of preferred -hydrocarbyl groups represented by Z include-CH₂C₆H₄CH₂-, --CH₂OC₈H₄OCH₂-, -CH₂OC₆H₁₀OCH₂-, --(CH₂)₃O(CH₂)₃-- and-(CH₂)₂S(CH₂)₂--.

Examples of particularly preferred -hydrocarbyl groups represented by Z include-(CH₂)₆, --(CH₂)₈--, --(CH₂)₁₂--, -CH₂CH(--CH₃)(CH₂)₄CH₃, 1,4-, 2,3- and 1,3-butylene, 2,5-hexylene, 2,7-heptylene and 3-methyl-1,6-hexylene,

It is preferred that all groups represented by Z are the same and are C₄₋₁₆-alkylene, more preferably C₄₋₁₂-alkylene, especially C₄₋₈-alkylene, more especially 1,6 hexylene.

Preferably each R independently is H, C₁₋₄-alkyl, C₁₋₄ alkoxy or C₁₋₄-alkoxy-OH, more preferably H or methyl, especially H.

Preferably the PMG consists essentially of groups of Formula (6).

Preferably all groups represented by R are the same. More preferably all groups represented by R are H.

The nature of the terminating groups on the PMG is not believed to be critical. Preferred terminating groups on the PMG are amino and guanidino.

In view of the foregoing preferences the PMG preferably comprises one or more groups of Formula (8) or salts thereof 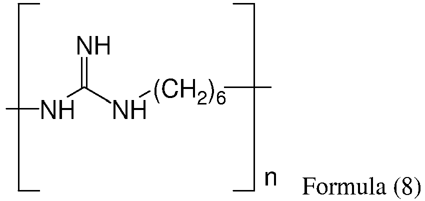 wherein: n is 2 to 50, preferably 3 to 25.

Preferably the PMG is in the form of a salt. Preferred salts are those with organic or inorganic acids, especially water-soluble salts, for example the chloride, gluconate, acetate or phosphate salt.

The PMGs may be prepared by the reaction of guanidine hydrochloride with a diamine, for example of the formula H₂N--Y--NH₂, HN(-A-) (-B-)NH or with a mixture of such diamines, wherein Z, A and B are as defined above.

It is to be understood that the PMG may also contain small amounts of repeating units other than repeat units of Formula (6) and (7). However it is preferred that the PMG consist essentially of or consists of repeat units of Formula (6) and/or (7) and terminating groups.

Examples include polyhexamethylene monoguanide such as SKAN B.TM. available from SK Corp, Korea and poly(oxyethylene)guanide hydrochloride such as Akacid.TM. available from POC, Austria.

A suitable example of a non-polymeric monoguanide includes n-docylguanide hydrochloride.

In a preferred embodiment, component (a) is polyhexamethylenebiguanide or the salts thereof. In one embodiment, component (a) is polyhexamethylenebiguanide hydrochloride salt.

Component (b) of the sanitizer formulation of the invention is a dialkyldimethyl ammonium salt. The alkyl group is a straight chain, a branched chain and/or cyclic chain groups. They can be the same or different. The exemplary salts are halide, acetate, nitrite, a lower alkosulfate, carbonate and/or an alkyl carboxylate. The preferred component (b) is didecyldimethyl ammonium chloride.

Component (c) of the sanitizer formulation of the invention is a compound selected from the group consisting of: an alkyldimethylbenzyl ammonium salt, an alkoxylated alcohol, and combinations thereof. Component (c) is utilized to stabilize the sanitizer formulation and further enhance the efficacy of the formulation of the invention.

The alkyldimethylbenzyl ammonium salt is not particularly limited. The salts can be halide, acetate, nitrite, a lower alkosulfate, carbonate and/or an alkyl carboxylate. In one embodiment, it is a chloride salt.

Examples of alkoxylated alcohols suitable for use for the sanitizer formulation of the invention include the condensation products of aliphatic (C₈ - C₂₀, preferably C₈ - C₁₆) primary or secondary linear or branched chain alcohols or phenols with alkylene oxides, preferably ethylene oxide or propylene oxide, most preferably ethylene oxide, and generally having from 15 to 80, preferably 16 to 80, more preferably up to 20 or from 20 to 80, and most preferably 20 to 50 alkylene oxide groups. For the sake of clarity, the alkylene oxide group is the hydrophilic repeating unit.

According to an especially preferred embodiment of the invention, the nonionic surfactant (ii) is an ethoxylated aliphatic alcohol of the formula (I): R--(--O--CH₂--CH₂)ₙ-OH wherein R is a hydrocarbyl chain having from 8 to 16 carbon atoms, and the average degree of ethoxylation n is from 15 to 50, preferably 20 to 50.

The hydrocarbyl chain, which is preferably saturated, preferably contains from 10 to 16 carbon atoms, more preferably from 12 to 15 carbon atoms. In commercial materials containing a spread of chain lengths, these figures represent an average. The hydrocarbyl chain may be linear or branched.

The alcohol may be derived from natural or synthetic feedstock. Preferred alcohol feedstocks are coconut, predominantly C₁₂ - C₁₄, and oxo C₁₂ - C₁₅ alcohols.

The average degree of ethoxylation ranges from 15 to 50, preferably from 16 to 50, more preferably from 20 to 50, and most preferably from 25 to 40.

Preferred materials have an average alkyl chain length of C₁₂ - C₁₆ and an average degree of ethoxylation of from 16 to 40, more preferably from 25 to 40.

In a preferred embodiment, the alkoxylated alcohol is trimethylnonyl polyethylene glycol ether.

The presence of a non-ionic surfactant in the sanitizer formulation of the invention is only optional. It is found that a sanitizer formulation containing component (a), component (b) and didecyldimethyl ammonium salt is stable even without the presence of any surfactants. This is surprising because alkyldimethylbenzyl ammonium salt is generally known as a biocide. Its ability to stabilize a formulation containing component (a) and component (b) has not been disclosed before. The dual role of alkyldimethylbenzyl ammonium salt as a biocide and a stabilizer may provide a cost benefit to the sanitizer formulations.

The ready to use sanitizer formulation according to the invention contains from about 25 ppm to about 110 ppm of component (a) and from about 20 ppm to about 125 ppm of component (b). Component (a) and component (b) are present in a weight ratio of from about 1:5 to 2.5:1. Preferably, component (a) is present in an amount of from about 35 ppm to about 75 ppm and component (b) is from about 50 ppm to about 100 ppm. The preferred weight ratio ranges of component (a) to the component (b) is from about 1:2 to about 1:1.

If present, the alkoxylated alcohol is suitably present in the sanitizer formulation in an amount of from about 35 ppm to about 200 ppm, preferably from about 105 ppm to about 125 ppm and the alkyldimethylbenzyl ammonium salt is present in an amount of from about 20 ppm to about 65 ppm, preferably from about 50 ppm to about 60 ppm.

One formulation according to the present invention contains from about 25 ppm to about 110 ppm, preferably from 50 ppm to about 75 ppm of component (a), such as PHMB, from about 40 ppm to about 125 ppm, preferably from about 75 ppm to about 100 ppm of component (b), such as DDAC, and from about 35 to 200 ppm, preferably from about 110 ppm to about 120 ppm of an alkoxylated alcohol such as trimethylnonyl polyethylene glycol ether. Component (a) and component (b) are present in a weight ratio of from about 1:5 to 2.5:1, preferably from 1:2 to 1:1.

Another formulation according to the present invention contains from about 25 ppm to 110 ppm, preferably from about 35 ppm to about 50 ppm of component (a), such as PHMB, from about 20 ppm to about 65 ppm, preferably from about 50 ppm to about 60 ppm of component (b) such as DDAC and from about 20 ppm to 65 ppm, preferably from about 50 ppm to about 60 ppm of component (c) such as ADBAC. Component (a) and component (b) are present in a weight ratio of from about 1:5 to about 2.5:1, preferably from about 1:3 to about 1:2.

The sanitizer formulation of the present invention may also include some optional ingredients. Suitable ingredients include but not limited to acetic acid and its sodium salt, α-Alkyl(C₁₀-C₁₄)-ω-hydroxypoly (oxyethylene) poly(oxypropylene) average molecular weight (in amu), 768 to 837; α-Alkyl(C₁₂-C₁₈)-ω-hydroxypoly (oxyethylene) poly(oxypropylene) average molecular weight (in amu), 950 to 1120; Ethanol; Ethylenediaminetetraacetic acid (EDTA), tetrasodium salt; α-(p-Nonylphenyl)-ω-hydroxypoly (oxyethylene) average poly(oxyethylene) (content 11 moles); Octanoic acid; citric acid, the salts and esters thereof, fumaric acid, lactic acid, n-butyl ester, lactic acid, ethyl ester, 2-propanol, sorbic acid and potassium salt.

In one embodiment, the combination of antimicrobial components for the sanitizer formulation can be provided in the form of a sanitizer composition concentrate that, upon dilution with water, provides antimicrobial efficacy in a sanitizer formulation. The concentrate comprises: (a) an antimicrobial active agent selected from the group consisting of biguanides, monoguanides, and combinations thereof, (b) a dialkyldimethyl ammonium salt, and (c) a compound selected from the group consisting of alkyldimethylbenzyl ammonium salt, an ethoxylated alcohol, and combinations thereof. In the concentrate, component (a) is present in an amount of from about 0.64% to about 3.84%, preferably from about 1.3% to about 3.2% and component (b) is present in an amount of from about 0.55% to about 5.12%, preferably in an amount of from about 1.2% to about 4.38%, based on the total weight of the sanitizer composition concentrate.

If present, the alkoxylated alcohol is suitably present in the sanitizer composition concentrate in an amount of from about 1% to about 6%, preferably from about 3% to about 5% and the alkyldimethylbenzyl ammonium salt is present in an amount of from about 0.55% to about 2.56%, preferably from about 1.28% to about 2.05%, all based on the total weight of the sanitizer composition concentrate.

One formulation concentrate according to the present invention contains component (a) such as PHMB at about 0.64 to about 3.84%, preferably from about 1.28 to about 1.92%, component (b) such as DDAC at about 1.1 to about 5.12%, preferably from about 1.92% to about 4.57%, and an alkoxylated alcohol such as trimethylnonyl polyethylene glycol ether at about 1 to about 6%, preferably from about 3 to about 5%, based on the total weight of the sanitizer composition concentrate. Component (a) and component (b) are present in a weight ratio of from about 1:5 to about 2.5:1, preferably from about 1:2 to about 1:1.

Another formulation concentrate according to the present invention contains component (a) at about 0.64% to about 2.74%, component (b) at about 0.55% to about 2.56% and component (c) such as ADBAC at about 0.55 to about 2.56%. The PHMB and the DDAC are present in a weight ratio of from about 1:5 to about 2.5:1, preferably from about 1:3 to about 1:2.

The ready to use formulations or the formulation concentrates of the present invention can be prepared by any conventional means. The methods include mixing different components in any order.

The ready to use sanitizer formulation can be used for cleaning and disinfecting surfaces that may be in contact with food. The method includes the step of contacting the surfaces to be sanitized with a ready to use sanitizer formulation according to the present invention. If a formulation concentrate is provided, a user can dilute the concentrate to a ready to use formulation, then apply the formulation to the surface to be sanitized.

The invention is further described in the examples given below. All percentages given herein are weight percents based on the total weight of the composition, unless otherwise stated.

### Example 1

Simple mixtures of PHMB with DDAC are known to be unstable. Several co-formulants were identified to allow the mixture to be delivered as a stable concentrate. The result is shown in Table 1.

**Table 1: Stability of PHMB, DDAC Mixtures**

| **Formulation** | **PHMB (% active)** | **DDAC (% active)** | **Co-formulant** | | **Stable** |
|---|---|---|---|---|---|
| | | | **Trade Name/ Chemical Name** | **Level (% a.i.)** | |
| 1 | 5 | 5 | | 0 | No |
| 2 | 5 | 5 | Makon 10 (nonylphenol ethoxylate POE-10) | 3 | Yes |
| 3 | 5 | 5 | Makon 12 (nonylphenol ethoxylate POE-12) | 3 | Yes |
| 4 | 5 | 5 | Neutronyx 656 (nonylphenol ethoxylate) | 3 | Yes |
| 5 | 5 | 5 | Tween 20 (Polyoxyethylene (20) sorbitan monolaurate) | 3 | Yes |
| 6 | 5 | 5 | Tergitol TMN10 (trimethylnonyl polyethylene glycol ether) | 3 | Yes |

### Example 2

Sanitizer concentrates were prepared using PHMB, DDAC and a non ionic surfactant (Tergitol TMN 10) or PHMB, DDAC and ADBAC. The details of the concentrate compositions are listed in Table 2.

**Table 2: Sanitizer Formulations**

| **Formulation** | **PHMB (% active)** | **DDAC(% active)** | **ADBAC (% active)** | **Tergitol TMN 10 (% active)** | **Use Dilution** | **Maximum Use Limit (ppm active)** |
|---|---|---|---|---|---|---|
| 7 | 0 | 3.84 | 0 | 3 | 256 | 240 |
| 8 | 0.64 | 3.2 | 0 | 3 | 256 | 288 |
| 9 | 0.77 | 3.07 | 0 | 3 | 256 | 300 |
| 10 | 0.96 | 2.88 | 0 | 3 | 256 | 320 |
| 11 | 1.28 | 2.56 | 0 | 3 | 256 | 360 |
| 12 | 1.92 | 1.92 | 0 | 3 | 256 | 480 |
| 13 | 2.56 | 1.28 | 0 | 3 | 256 | 720 |
| 14 | 2.74 | 1.10 | 0 | 3 | 256 | 780 |
| 15 | 3.84 | 0 | 0 | 3 | 256 | 540 |
| 16 | 0 | 1.92 | 1.92 | 0 | 256 | 200 |
| 17 | 0.64 | 1.60 | 1.60 | 0 | 256 | 240 |
| 18 | 0.77 | 1.54 | 1.54 | 0 | 256 | 250 |
| 19 | 0.96 | 1.44 | 1.44 | 0 | 256 | 267 |
| 20 | 1.28 | 1.28 | 1.28 | 0 | 256 | 300 |
| 21 | 1.92 | 0.96 | 0.96 | 0 | 256 | 400 |
| 22 | 2.56 | 0.64 | 0.64 | 0 | 256 | 600 |
| 23 | 2.74 | 0.55 | 0.55 | 0 | 256 | 698 |
| 24 | 3.84 | 0 | 0 | 0 | 256 | 540 |
| 25 | 1.92 | 3.84 | 0 | 3 | 384 | 360 |
| 26 | 2.88 | 2.88 | 0 | 3 | 384 | 480 |
| 27 | 2.56 | 5.12 | 0 | 3 | 512 | 360 |
| 28 | 3.84 | 3.84 | 0 | 3 | 512 | 480 |
| 29 | 1.92 | 1.92 | 1.92 | 0 | 384 | 300 |
| 30 | 2.56 | 2.56 | 2.56 | 0 | 512 | 300 |

### Example 3

Certain formulations as listed in Tables 1 and 2 were tested for biocidal activity. The results are shown in Tables 3 and 4.

The Association of Official Analytical Chemists (AOAC) Germicidal and Detergent Sanitizers Method is a method required to generate data to support the efficacy data requirements for sanitizing rinses (for previously cleaned food-contact surfaces). When claims for the effectiveness of the product in hard water are made, all required data must be developed at the hard water tolerance claimed. Acceptable results must demonstrate a 99.999% reduction in the number of microorganisms within 30 seconds against both *Escherichia coli* ATCC and *Staphylococcus aureus* ATCC 6538.

As shown from the tables, mixtures of DDAC, PHMB with surfactant Tergitol and mixtures of DDAC and ADBAC with PHMB have improved biocidal activity over the individual components.

Certain levels of the active ingredients were shown to pass AOAC Germicidal and Detergent Sanitizer (G&DS) test to a level of 500 ppm synthetic water hardness.

**Table 3: Relative Performance and Cost of Various Ratios of PHMB: DDAC (Co-formulated with Tergitol TMN 10)**

| **Formulation Number** | **ppm active** | | **Performance in AOAC G&DS at 150ppm active** | | **Pass/Fail** | **Cost In Use ($/litre of RTU)** |
|---|---|---|---|---|---|---|
| | **PHMB** | **DDAC** | ***E. coli*** | ***S.aureus*** | | |
| 7 | 0 | 150 | 99.998 | 100.000 | F | 0.005 |
| 8 | 25 | 125 | 100.000 | 100.000 | P | 0.006 |
| 9 | 30 | 120 | 100.000 | 100.000 | P | 0.007 |
| 10 | 37.5 | 112.5 | 100.000 | 100.000 | P | 0.007 |
| 11 | 50 | 100 | 100.000 | 100.000 | P | 0.007 |
| 12 | 75 | 75 | 100.000 | 100.000 | P | 0.008 |
| 13 | 100 | 50 | 100.000 | 100.000 | P | 0.009 |
| 14 | 107 | 43 | 100.000 | 100.000 | P | 0.010 |
| 15 | 150 | 0 | 99.992 | 99.983 | F | 0.011 |

| | | | | | | |
|---|---|---|---|---|---|---|
| RTU = Ready to Use Sanitizer Formulation | | | | | | |

**Table 4: Relative Performance and Cost of Various Ratios of PHMB: ADBAC: DDAC**

| **Formulation Number** | **ppm active** | | | **Performance in AOAC G&DS at 150ppm active** | | **Pass/Fail** | **Cost In Use ($/litre of RTU)** |
|---|---|---|---|---|---|---|---|
| | **PHMB** | **DDAC** | **ADBAC** | ***E.coli*** | ***S.aureus*** | | |
| 16 | 0 | 75 | 75 | 99.992 | 100.000 | F | 0.005 |
| 17 | 25 | 62.5 | 62.5 | 99.996 | 100.000 | F | 0.006 |
| 18 | 30 | 60 | 60 | 99.994 | 100.000 | F | 0.006 |
| 19 | 37.5 | 56.3 | 56.3 | 99.999 | 100.000 | P | 0.007 |
| 20 | 50 | 50 | 50 | 100.000 | 100.000 | P | 0.007 |
| 21 | 75 | 37.5 | 37.5 | 99.997 | 100.000 | F | 0.008 |
| 22 | 100 | 25 | 25 | 99.998 | 99.974 | F | 0.009 |
| 23 | 107 | 21.5 | 21.5 | 100.000 | 99.974 | F | 0.009 |
| 24 | 150 | 0 | 0 | 99.900 | 99.540 | F | 0.011 |

| | | | | | | | |
|---|---|---|---|---|---|---|---|
| RTU = Ready to Use sanitizer formulation | | | | | | | |

### Example 4

VANTOCIL™ NR3.8 (PHMB:ADBA:DDACC at 1:1:1 ratio) and Bardac™ 205M (a mixture of alkyl dimethyl benzyl ammonium chloride (ADBAC), didecyl dimethyl ammonium chloride (DDAC), octyl decyl dimethyl ammonium chloride and dioctyl dimethyl ammonium chloride) were tested for their tolerance to the negative effects of hard water using the AOAC G&DS Test described above in Example 3.

The hard water level, which is represented by the ppm value of CaCO₃ in water, and the pass level, which is the amount of the actives required to reduce the bacterial numbers in 30 seconds, are shown in Table 5.

**Table 5 Tolerance to the negative effects of hard water**

| **Product** | **Hard Water Level (ppm CaCO₃)** | **Pass Level (ppm active)** |
|---|---|---|
| VANTOCIL NR3.8 (PHMB + ADBAC + DDAC @ 1:1:1 ratio) | 500 | 150 |
| | 700 | 400 |
| Bardac 205M | 500 | 250 |
| | 700 | 500 |

As shown from the table, the mixture of PHMB, ADBAC and DDAC is more tolerant to the negative effects of hard water compared to the mixture that contains quaternary ammonium compounds but not PHMB.

## Claims

1. A sanitizer formulation comprising: (a) an antimicrobial active agent selected from the group consisting of biguanides, monoguanides, and combinations thereof, present in an amount of from 25 to 110 ppm; (b) a dialkyldimethyl ammonium salt present in an amount of from 20 to 125 ppm; and (c) a compound selected from the group consisting of an alkyldimethylbenzyl ammonium salt present in an amount of from 20 to 65 ppm, an alkoxylated alcohol present in an amount of from 35 to 200 ppm, and combinations thereof, wherein the alkoxylated alcohol is selected from condensation products of aliphatic branched chain primary or secondary alcohols or phenols with alkylene oxides; wherein the component (a) and the component (b) are present in a range of weight ratios between 1:5 to 2.5:1.

2. The sanitizer formulation of claim 1, wherein the component (a) is polyhexamethylene biguanide or a salt thereof.

3. The sanitizer formulation of claim 1, wherein the alkoxylated alcohol is trimethylnonyl polyethylene glycol ether.

4. The sanitizer formulation of claim 1, wherein the component (a) is present in an amount of from 25 to 110 ppm, the component (b) is present in an amount of from 40 to 125 ppm, and the component (c) is an alkoxylated alcohol, which is present in an amount of from 35 to 200 ppm.

5. The sanitizer formulation of claim 1, wherein the component (a) is present in an amount of from 25 to 110 ppm, the component (b) is present in an amount of from 20 to 65 ppm, and the component (c) is an alkyldimethylbenzyl ammonium chloride, which is present in an amount of from 20 to 65 ppm.

6. A method for sanitizing food contact surfaces comprising contacting a sanitizer formulation of any of claims 1 to 5 with the surface to be sanitized.

7. A method for sanitizing food contact surfaces comprising the steps of: providing a sanitizer formulation concentrate, which upon dilution with water provides the amount of components (a), (b), and (c) as specified in claim 1, the concentrate comprising the component (a) in an amount of from 0.64% to 3.84%, the component (b) in an amount of from 0.55% to 5.12%, based on the total weight of the sanitizer composition concentrate, and wherein the component (a) and the component (b) are present in a range of weight ratios between 1:5 to 2.5:1; diluting the sanitizer formulation concentrate to provide a ready to use antimicrobially effective sanitizer formulation as specified in claim 1; and contacting the ready to use sanitizer formulation with the surface to be sanitized.

8. The method of claim 7, wherein the component (a) is polyhexamethylene biguanide or a salt thereof.

9. The method of claim 7, wherein the alkoxylated alcohol is trimethylnonyl polyethylene glycol ether.

10. The method of claim 7, wherein the component (c) is an alkoxylated alcohol, and wherein the alkoxylated alcohol is present in an amount of from 1% to 6%, based on the total weight of the concentrate.

11. The method of claim 7, wherein the component (c) is an alkyldimethylbenzyl ammonium chloride, and wherein the alkyldimethylbenzyl ammonium chloride is present in an amount of from 0.55% to 2.56%, based on the total weight of the concentrate.

## Patentansprüche

1. Desinfektionsreinigerformulierung, umfassend: (a) einen antimikrobiellen Wirkstoff, ausgewählt aus der Gruppe bestehend aus Biguaniden, Monoguaniden und Kombinationen davon, vorhanden in einer Menge von 25 bis 110 ppm; (b) ein Dialkyldimethylammoniumsalz, vorhanden in einer Menge von 20 bis 125 ppm; und (c) eine Verbindung ausgewählt aus der Gruppe bestehend aus einem Alkyldimethylbenzylammoniumsalz, vorhanden in einer Menge von 20 bis 65 ppm, einem alkoxylierten Alkohol, vorhanden in einer Menge von 35 bis 200 ppm, und Kombinationen davon, wobei der alkoxylierte Alkohol ausgewählt ist aus Kondensationsprodukten von aliphatischen verzweigtkettigen primären oder sekundären Alkoholen oder Phenolen mit Alkylenoxiden; wobei die Komponente (a) und die Komponente (b) in einem Bereich von Gewichtsverhältnissen zwischen 1:5 und 2,5:1 vorhanden sind.

2. Desinfektionsreinigerformulierung gemäss Anspruch 1, wobei die Komponente (a) Polyhexamethylenbiguanid oder ein Salz davon ist.

3. Desinfektionsreinigerformulierung gemäss Anspruch 1, wobei der alkoxylierte Alkohol Trimethylnonylpolyethylenglycolether ist.

4. Desinfektionsreinigerformulierung gemäss Anspruch 1, wobei die Komponente (a) in einer Menge von 25 bis 110 ppm vorhanden ist, die Komponente (b) in einer Menge von 40 bis 125 ppm vorhanden ist und die Komponente (c) ein alkoxylierter Alkohol ist, der in einer Menge von 35 bis 200 ppm vorhanden ist.

5. Desinfektionsreinigerformulierung gemäss Anspruch 1, wobei die Komponente (a) in einer Menge von 25 bis 110 ppm vorhanden ist, die Komponente (b) in einer Menge von 20 bis 65 ppm vorhanden ist und die Komponente (c) ein Alkyldimethylbenzylammoniumchlorid ist, das in einer Menge von 20 bis 65 ppm vorhanden ist.

6. Verfahren zum Desinfektionsreinigen von Oberflächen mit Lebensmittelkontakt, umfassend das In-Kontakt-Bringen einer Desinfektionsreinigerformulierung gemäss einem der Ansprüche 1 bis 5 mit der zu desinfektionsreinigenden Oberfläche.

7. Verfahren zum Desinfektionsreinigen von Oberflächen mit Lebensmittelkontakt, umfassend die Schritte: Bereitstellen eines Konzentrats einer Desinfektionsreinigerformulierung, das bei Verdünnen mit Wasser die Menge an Komponenten (a), (b) und (c) wie in Anspruch 1 angegeben liefert, wobei das Konzentrat die Komponente (a) in einer Menge von 0,64% bis 3,84%, die Komponente (b) in einer Menge von 0,55% bis 5,12%, bezogen auf das Gesamtgewicht des Konzentrats der Desinfektionsreinigerformulierung umfasst, und wobei die Komponente (a) und die Komponente (b) in einem Bereich von Gewichtsverhältnissen zwischen 1:5 und 2,5:1 vorhanden sind; Verdünnen des Konzentrats der Desinfektionsreinigerformulierung, um eine gebrauchsfertige, antimikrobiell wirksame Desinfektionsreinigerformulierung gemäss Anspruch 1 zu erhalten; und Inkontaktbringen der gebrauchsfertigen Desinfektionsreinigerformulierung mit der zu desinfektionsreinigenden Oberfläche.

8. Verfahren gemäss Anspruch 7, wobei die Komponente (a) Polyhexamethylenbiguanid oder ein Salz davon ist.

9. Verfahren gemäss Anspruch 7, wobei der alkoxylierte Alkohol Trimethylnonylpolyethylenglycolether ist.

10. Verfahren gemäss Anspruch 7, wobei die Komponente (c) ein alkoxylierter Alkohol ist und wobei der alkoxylierte Alkohol in einer Menge von 1% bis 6%, bezogen auf das Gesamtgewicht des Konzentrats, vorhanden ist.

11. Verfahren gemäss Anspruch 7, wobei die Komponente (c) ein Alkyldimethylbenzylammoniumchlorid ist und wobei das Alkyldimethylbenzylammoniumchlorid in einer Menge von 0,55% bis 2,56%, bezogen auf das Gesamtgewicht des Konzentrats, vorhanden ist.

## Revendications

1. Formulation d'assainisseur comprenant: (a) un agent actif antimicrobien choisi dans le groupe constitué par les biguanides, les monoguanides, et des combinaisons de ceux-ci, présent selon une quantité allant de 25 à 110 ppm; (b) un sel de dialkyldiméthylammonium présent selon une quantité allant de 20 à 125 ppm; et (c) un composé choisi dans le groupe constitué par un sel d'alkyldiméthylbenzylammonium présent selon une quantité allant de 20 à 65 ppm, un alcool alcoxylé présent selon une quantité allant de 35 à 200 ppm, et des combinaisons de ceux-ci, où l'alcool alcoxylé est choisi parmi les produits de condensation d'alcools primaires ou secondaires aliphatiques à chaîne ramifiée ou de phénols avec des oxydes d'alkylène; où le composant (a) et le composant (b) sont présents dans une plage de rapports pondéraux allant de 1:5 à 2,5:1.

2. Formulation d'assainisseur selon la revendication 1, dans laquelle le composant (a) est le biguanide de polyhexaméthylène ou un sel de celui-ci.

3. Formulation d'assainisseur selon la revendication 1, dans laquelle l'alcool alcoxylé est le polyéthylène glycol triméthylnonyl éther.

4. Formulation d'assainisseur selon la revendication 1, dans laquelle le composant (a) est présent selon une quantité allant de 25 à 110 ppm, le composant (b) est présent selon une quantité allant de 40 à 125 ppm, et le composant (c) est un alcool alcoxylé, qui est présent selon une quantité allant de 35 à 200 ppm.

5. Formulation d'assainisseur selon la revendication 1, dans laquelle le composant (a) est présent selon une quantité allant de 25 à 110 ppm, le composant (b) est présent selon une quantité allant de 20 à 65 ppm, et le composant (c) est un sel d'alkyldiméthylbenzylammonium, qui est présent selon une quantité allant de 20 à 65 ppm.

6. Méthode d'assainissement de surfaces entrant en contact avec des aliments, comprenant la mise en contact d'une formulation d'assainisseur selon l'une quelconque des revendications 1 à 5 avec la surface à assainir.

7. Méthode d'assainissement de surfaces entrant en contact avec des aliments, comprenant les étapes consistant à fournir un concentré de formulation d'assainisseur, qui, lors d'une dilution par de l'eau, fournit la quantité de composants (a), (b) et (c) telle que spécifiée selon la revendication 1, le concentré comprenant le composant (a) selon une quantité allant de 0,64% à 3,84%, le composant (b) selon une quantité allant de 0,55% à 5,12%, sur la base du poids total du concentré de composition d'assainisseur, et où le composant (a) et le composant (b) sont présents selon une plage de rapports pondéraux allant de 1:5 à 2,5:1; diluer le concentré de formulation d'assainisseur afin de fournir une formulation d'assainisseur efficace sur le plan antimicrobien telle que spécifiée selon la revendication 1; et mettre en contact la formulation d'assainisseur prête à l'emploi avec la surface à assainir.

8. Méthode selon la revendication 7, dans laquelle le composant (a) est le biguanide de polyhexaméthylène ou un sel de celui-ci.

9. Méthode selon la revendication 7, dans laquelle l'alcool alcoxylé est le polyéthylène glycol triméthylnonyl éther.

10. Méthode selon la revendication 7, dans laquelle le composant (c) est un alcool alcoxylé, et où l'alcool alcoxylé est présent selon une quantité allant de 1% à 6%, sur la base du poids total du concentré.

11. Méthode selon la revendication 7, dans laquelle le composant (c) est un chlorure d'alkyldiméthylbenzylammonium, et où le chlorure d'alkyldiméthylbenzylammonium est présent selon une quantité allant de 0,55% à 2,56%, sur la base du poids total du concentré.
